(19) Europäisches Patentamt / European Patent Office / Office européen des brevets

(11) **EP 3 408 961 B1**

(12) **EUROPEAN PATENT SPECIFICATION**

(45) Date of publication and mention
of the grant of the patent:
**25.02.2026 Bulletin 2026/09**

(21) Application number: **16745262.2**

(22) Date of filing: **29.06.2016**

(51) International Patent Classification (IPC):
*H04L 5/00* (2006.01)    *H04L 27/26* (2006.01)

(52) Cooperative Patent Classification (CPC):
**H04L 5/0051; H04L 27/26**

(86) International application number:
**PCT/US2016/040079**

(87) International publication number:
**WO 2017/131811 (03.08.2017 Gazette 2017/31)**

(54) **UPLINK BEAM REFINEMENT**

UPLINK-STRAHLVERFEINERUNG

RAFFINEMENT DE FAISCEAU DE LIAISON MONTANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2016 US 201662288309 P**

(43) Date of publication of application:
**05.12.2018 Bulletin 2018/49**

(73) Proprietor: **Apple Inc.**
**Cupertino, CA 95014 (US)**

(72) Inventors:
• **ZHANG, Yushu**
**Beijing 100190 (CN)**
• **ZHU, Yuan**
**Beijing 100012 (CN)**
• **XIONG, Gang**
**Portland, Oregon 97229 (US)**
• **NIU, Huaning**
**Milpitas, California 95035 (US)**
• **CHANG, Wenting**
**Beijing 100190 (CN)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**WO-A1-2010/008897    WO-A1-2015/080645**

• QUALCOMM INC: "Details on increasing number of combs for SRS", vol. RAN WG1, no. Anaheim, USA; 20151115 - 20151122, 15 November 2015 (2015-11-15), XP051039993, Retrieved from the Internet <URL:http://www.3gpp.org/ftp/Meetings_3GPP_SYNC/RAN1/Docs/> [retrieved on 20151115]
• FUJITSU: "Discussion on possible CSI-RS and SRS enhancement for EBF/FD-MIMO", vol. RAN WG1, no. Belgrade, Serbia; 20150420 - 20150424, 19 April 2015 (2015-04-19), XP050934440, Retrieved from the Internet <URL:http://www.3gpp.org/ftp/Meetings_3GPP_SYNC/RAN1/Docs/> [retrieved on 20150419]
• HUAWEI: "Increasing SRS capacity to support UL MIMO", 3GPP DRAFT; R1-094707 INCREASING SRS CAPACITY TO SUPPORT UL MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389107

EP 3 408 961 B1

**(Cont. next page)**

• HUAWEI: "Channel Sounding Capacity Improvements", 3GPP DRAFT; R1-100808, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 22 January 2010 (2010-01-22), XP050418430

**Description**

CROSS-REFERENCE TO RELATED APPLICATIONS

The present application is related to and claims priority to United States Provisional Patent Application No. 62/288,309, entitled "Uplink Beam Refinement" filed January 28, 2016.

FIELD

The present disclosure generally relates to the field of electronic communication. More particularly, some embodiments generally relate to uplink beam refinement.

BACKGROUND

Mobile communication has evolved significantly from early voice systems to today's highly sophisticated integrated communication platforms. 4G (4th Generation) LTE (Long Term Evolution) networks are deployed in more than 100 countries to provide services in various spectrum band allocations, depending on spectrum regime.
Recently, significant momentum has started to build around the idea of a next generation, or Fifth Generation (5G), wireless communications technology.
FUJITSU, "Discussion on possible CSI-RS and SRS enhancement for EBF/FD-MIMO", vol. RAN WG1, 3GPP Draft discloses a two-dimensional active antenna array exploiting the elevation dimension as well as the azimuth dimension in a MIMO system to further improve system performance to accommodate increasing capacity demand wherein it is stated that, for enabling elevation beamforming, reference signals such as CSI-RS and SRS are very important to measure the downlink channel quality and uplink channel status.
Document WO2015/080645 discloses beam selection at a network node based on uplink measurements using sounding reference signals received from a wireless device in a 5G system.

SUMMARY OF INVENTION

The present invention is defined by the features of the independent claim(s). Preferred advantageous embodiments thereof are defined by the sub-features of the dependent claims.
Any reference to "embodiment(s)", "example(s)" or "aspect(s) of the invention" in this description not falling under the scope of the claims should be interpreted as illustrative example(s) for understanding the invention.

BRIEF DESCRIPTION OF THE DRAWINGS

The detailed description is provided with reference to the accompanying figures. In the figures, the left-most digit(s) of a reference number identifies the figure in which the reference number first appears. The use of the same reference numbers in different figures indicates similar or identical items.

Fig. 1 shows an exemplary block diagram of the overall architecture of a 3 GPP LTE network that includes one or more devices that are capable of implementing techniques for uplink beam refinement, according to the subject matter disclosed herein.

Fig. 2 illustrates one example for Fifth Generation (5G) Sounding Reference Symbol (xSRS) signal structure, according to an embodiment.

Fig. 3 illustrates Interleaved Frequency Division Multiplexing Access (IFDMA) based xSRS time domain signal, according to an embodiment.

Fig. 4 illustrates an alternative IFDMA based xSRS time domain signal, according to an embodiment.

Fig. 5 illustrates one example for the xSRS signal structure, according to an embodiment.

Fig. 6 is a schematic, block diagram illustration of an information-handling system in accordance with one or more exemplary embodiments disclosed herein.

Fig. 7 is an isometric view of an exemplary embodiment of the information-handling system of Fig. 6 that optionally may include a touch screen in accordance with one or more embodiments disclosed herein.

Fig. 8 is a schematic, block diagram illustration of components of a wireless device in accordance with one or more exemplary embodiments disclosed herein.

It will be appreciated that for simplicity and/or clarity of illustration, elements illustrated in the figures have not necessarily been drawn to scale. For example, the dimensions of some of the elements may be exaggerated relative to other elements for clarity. Further, if considered appropriate, reference numerals have been repeated among the figures to indicate corresponding and/or analogous elements.

DETAILED DESCRIPTION

In the following description, numerous specific details are set forth in order to provide a thorough understanding of various embodiments. However, various embodiments may be practiced without the specific details. In other instances, well-known methods, procedures, components, and circuits have not been described in detail so as not to obscure the particular embodiments. Further, various aspects of embodiments may be performed using various means, such as integrated semiconductor circuits ("hardware"), computer-readable instructions organized into one or more programs ("software"), or some combination of hardware and software. For the purposes of this disclosure reference to "logic" shall mean either hardware, software, firmware, or some combination thereof.

One or more embodiments relate to uplink beam refinement (e.g., for 5G (Fifth Generation) and/or RAN1 (Radio layer 1 3GPP (Third Generation Partnership Project) LTE (Long Term Evolution)). More particularly, in one embodiment, a 5G Sounding Reference Signal (xSRS) is used to refine and/or track an uplink Receiving (Rx) beam. In an embodiment, a lower overhead xSRS structure allows for refinement of an uplink Rx beam.

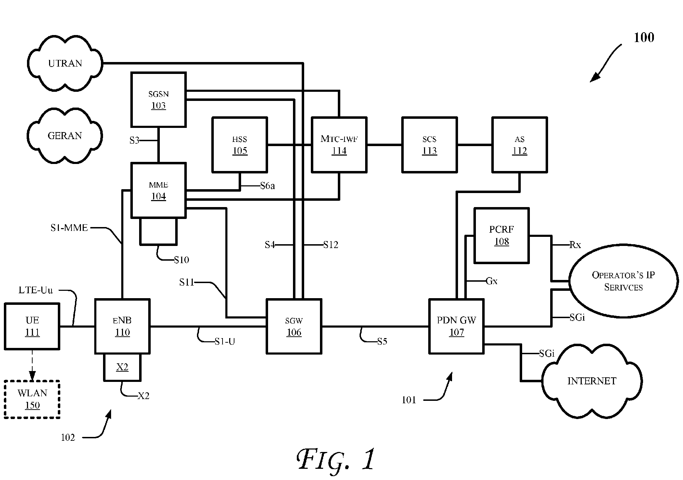

Fig. 1 shows an exemplary block diagram of the overall architecture of a 3GPP LTE network 100 that includes one or more devices that are capable of implementing techniques for uplink beam refinement, according to the subject matter disclosed herein. Fig. 1 also generally shows exemplary network elements and exemplary standardized interfaces. At a high level, network 100 comprises a Core Network (CN) 101 (also referred to as an Evolved Packet System (EPC)), and an air-interface access network E-UTRAN (Evolved Universal Terrestrial Radio Access Network) 102. CN 101 is responsible for the overall control of the various User Equipment (UE) coupled to the network and establishment of the bearers. CN 101 may include functional entities, such as a home agent and/or an ANDSF (Access Network Discovery and Selection Function ) server or entity, although not explicitly depicted. E-UTRAN 102 is responsible for all radio-related functions.

Exemplary logical nodes of CN 101 include, but are not limited to, a Serving GPRS Support Node (SGSN) 103, Mobility Management Entity (MME) 104, a Home Subscriber Server (HSS) 105, a Serving Gateway (SGW) 106, a PDN Gateway (or PDN GW) 107, and a Policy and Charging Rules Function (PCRF) Manager logic 108. The functionality of each of the network elements of CN 101 is generally in accordance with various standards and is not described herein for simplicity. Each of the network elements of CN 101 are interconnected by exemplary standardized interfaces, some of which are indicated in Fig. 1, such as interfaces S3, S4, S5, etc.

While CN 101 includes many logical nodes, the E-UTRAN access network 102 is formed by at least one node, such as evolved NodeB 110 (Base Station (BS), eNB (or eNodeB that refers to evolved Node B)), which couples to one or more UE 111, of which only one is depicted in Fig 1 for the sake of simplicity. UE 111 is also referred to herein as a Wireless Device (WD) and/or a Subscriber Station (SS), and may include an M2M (Machine to Machine) type device. In one example, UE 111 may be coupled to eNB by an LTE-Uu interface. In one exemplary configuration, a single cell of an E-UTRAN access network 102 provides one substantially localized geographical transmission point (e.g., having multiple antenna devices) that provides access to one or more UEs. In another exemplary configuration, a single cell of an E-UTRAN access network 102 provides multiple geographically substantially isolated transmission points (each having one or more antenna devices) with each transmission point providing access to one or more UEs simultaneously and with the signaling bits defined for the one cell so that all UEs share the same spatial signaling dimensioning.

For normal user traffic (as opposed to broadcast), there is no centralized controller in E-UTRAN; hence the E-UTRAN architecture is said to be flat. The eNBs can be interconnected with each other by an interface known as "X2" and to the EPC by an S1 interface. More specifically, an eNB is coupled to MME 104 by an S1 MME interface and to SGW 106 by an S1 U interface. The protocols that run between the eNBs and the UEs are generally referred to as the "AS protocols." Details of the various interfaces can be in accordance with available standards and are not described herein for the sake of simplicity.

The eNB 110 hosts the PHYsical (PHY), Medium Access Control (MAC), Radio Link Control (RLC), and Packet Data Control Protocol (PDCP) layers, which are not shown in Fig. 1, and which include the functionality of user-plane header-compression and encryption. The eNB 110 also provides Radio Resource Control (RRC) functionality corresponding to the control plane, and performs many functions including radio resource management, admission control, scheduling, enforcement of negotiated Up Link (UL) QoS (Quality of Service), cell information broadcast, ciphering/deciphering of user and control plane data, and compression/decompression of DL/UL (Downlink/Uplink) user plane packet headers.

The RRC layer in eNB 110 covers all functions related to the radio bearers, such as radio bearer control, radio admission control, radio mobility control, scheduling and dynamic allocation of resources to UEs in both uplink and downlink, header compression for efficient use of the radio interface, security of all data sent over the radio interface, and connectivity to the EPC. The RRC layer makes handover decisions based on neighbor cell measurements sent by UE 111, generates pages for UEs 111 over the air, broadcasts system information, controls UE measurement reporting, such as the periodicity of Channel Quality Information (CQI) reports, and allocates cell-level temporary identifiers to active UEs 111. The RRC layer also executes transfer of UE context from a source eNB to a target eNB during handover, and provides integrity protection for RRC messages. Additionally, the RRC layer is responsible for the setting up and maintenance of radio bearers. Various types of (WLAN) may be supported such as any of those discussed herein.

As mentioned above in the background section, recently, significant momentum has started to build around the idea of a next generation, or Fifth Generation (5G), wireless communications technology. A wide range of applications and services may be used with 5G systems, such as: (a) Enhanced Mobile Broadband: providing higher data rates will continue to be a key driver in network development and evolution for 5G system (for example, it can be envisioned that a peak data rate of more than 10Gps and a minimum guaranteed user data rate of at least 100Mbps be supported for 5G system); (b) Massive Machine Type Communications (MTC): support of a massive number of Internet of Things (IoT) or MTC devices may become one key feature for 5G system (for example, where MTC devices used for many applications may utilize low operational power consumption and be expected to communicate with infrequent small burst transmissions); and/or (c) Ultra-reliable and low latency or mission critical communications: support of mission critical MTC applications for 5G system may provide extremely high level of reliable connectivity with guaranteed low latency, availability, and reliability-of-service.

Generally, beamforming refers to a signal processing technique for directional signal transmission or reception. To gain uplink channel knowledge, Sounding Reference Symbols (SRS) may be used to regularly transmit (e.g., dedicated) pilot signals across (e.g., other) bands. Sounding patterns may be individually assigned (e.g., by adaptive periodicity and frequency) in some embodiments. SRS may be individually configured per UE by the eNB. Hence, the eNB may trigger the UE to generate/transmit SRS to the eNB. The eNB can refine/track the uplink Rx beam by receiving the SRS with beam sweeping.

In MIMO (Multiple Input, Multiple Output) systems, an eNodeB may receive the uplink signal with Receiving (Rx) beamforming. If the uplink downlink channel reciprocity can be assumed, the uplink Rx beam can be obtained by the corresponding downlink Transmitting (Tx) beams that are selected by the UE.

Furthermore, the 5G Sounding Reference Signal (xSRS) can be used for the Rx beam tracking and/or refinement, which may have different configuration from any current SRS (LTE SRS). The SRS can be transmitted in a subframe, and the eNodeB could sweep the Rx beams in each symbol and select the best Rx beam. xSRS may also be applied in 4G; hence xSRS may be similar to SRS defined in 3GPP TS 36.211. The "x" in xSRS distinguishes the 4G and 5G signal. Further, xSRS may be considered as an independent channel transmitted from UE to eNodeB. In an embodiment, the eNodeB may transmit some control signaling (such as DCI (Downlink Control Information)) to trigger the UE to transmit xSRS. Regarding the xSRS configuration, uplink downlink channel reciprocity can be assumed so that one key goal for the xSRS can be to track and refine the Rx beam. With the help of xSRS, the eNodeB could refine the Rx beam, determine the uplink Modulation and Coding Scheme (MCS) and digital precoder, perform the uplink power control, estimate the Doppler frequency offset and so on. Hence, how to transmit the xSRS to support these functions may become a challenge.

Generally, one or more embodiments provide a lower overhead xSRS structure including: (a) xSRS signal structure; and/or (b) uplink Rx beam refinement technique. More particularly, the base sequence of xSRS can be generated based on the Quadrature Phase Shift Keying (QPSK) or Zadoff-Chu sequence, which may be determined by the cell ID (Identifier), virtual cell ID, xSRS ID, and subframe/slot/symbol index. For Zadoff-Chu sequence, the cyclic shift may be configured via the higher layer.

In an embodiment, the xSRS may span $N_{Sym}^{xSRS}$ symbols in one subframe, which may be located in the last $N_{Sym}^{xSRS}$ symbols in one example. The uplink Tx beam in all the xSRS symbols can be the same for one UE. The xSRS can contain $N_{AP}^{xSRS}$ Antenna Ports (APs), and multiple APs are mapped in a Frequency Division Multiplex (FDM) manner. The xSRS sequence may be multiplied with the amplitude scaling factor $\beta_{xSRS}$ in order to conform to the transmit power provided by the higher layer and mapped to resource elements $(k, l)$ on antenna port p according to:

$$\alpha_{Tk'+k_0^{(p)}+\Delta \times N_{AP}^{xSRS}}^{(p)} = \begin{cases} \beta_{xSRS} r_{xSRS}^{(p)}(k'), & k' = 0,1,\ldots,M-1, \\ 0, & otherwise \end{cases},$$

where $r_{xSRS}^{(p)}(k')$ indicates the base sequence of xSRS for antenna port p; *T* denotes the subcarrier interval, e.g., *T=56*; $\Delta$ refers to an offset configured by higher layer signaling or calculated based on the cell ID, virtual cell ID or xSRS ID, e.g.,

$$\Delta = N_{ID}^{cell} \; mod \; N_{AP}^{xSRS}$$ ; *M* represents the number of base sequence of AP *p* for xSRS.

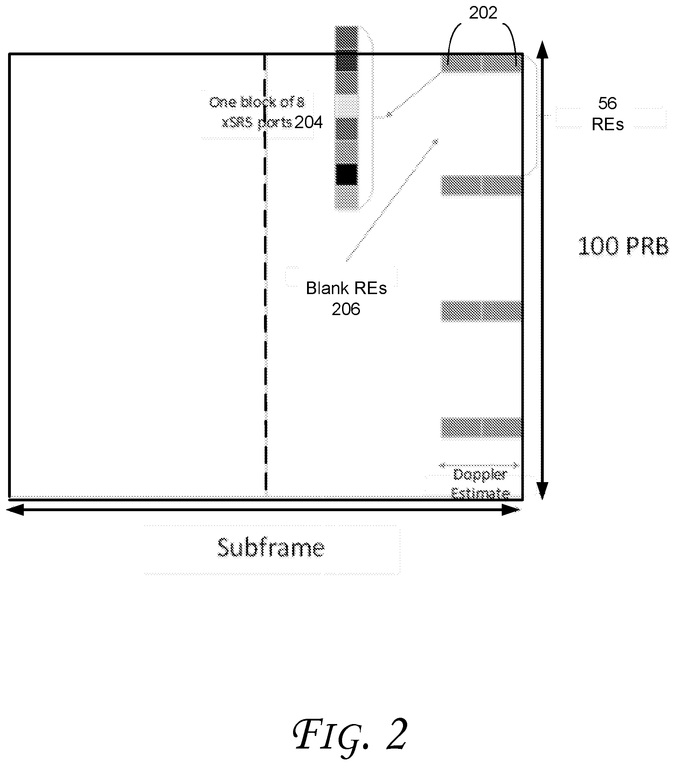

Fig. 2 illustrates one example for xSRS signal structure, according to an embodiment. In the examples of Figs. 2 and 5, 100 Physical Resource Blocks (PRBs) are utilized. As illustrated, the xSRS is mapped to the last two OFDM (Orthogonal Frequency Division Multiplexing) symbols (202), and (e.g., a maximum) 8 APs are supported (204). The blank Resource Elements (REs) 206 are reserved for the xSRS to another Transmission Point (TP).

The eNodeB may try two Rx beams for the two xSRS symbols and refine the Rx beam according to the measured Channel Quality Indicator (CQI) and the Rx beams in each symbol. In one embodiment, the horizontal angle and vertical angle of refined Rx beam can be obtained, respectively, by:

$$\theta = \sqrt{\frac{s_1}{s_1 + s_2}}\,\theta_1 + \sqrt{\frac{s_2}{s_1 + s_2}}\,\theta_2$$

$$\varphi = \sqrt{\frac{s_1}{s_1 + s_2}}\,\varphi_1 + \sqrt{\frac{s_2}{s_1 + s_2}}\,\varphi_2$$

where $\theta_j$ indicates horizontal angle of the Rx beam for xSRS symbol *j*; $\varphi_j$ indicates vertical angle of the Rx beam for xSRS symbol *j*; $s_j$ denotes the spectrum efficiency measured from xSRS symbol *j*.

For more than two xSRS symbols case, the horizontal and vertical angle of refined Rx beam may be obtained by:

$$\theta = \sum_{l=1}^{N_{sym}^{xSRS}} \sqrt{\frac{s_l}{S}}\,\theta_l$$

$$\varphi = \sum_{l=1}^{N_{sym}^{xSRS}} \sqrt{\frac{s_l}{S}}\,\varphi_l$$

where *S* can be calculated as below:

$$S = \sum_{l=1}^{N_{sym}^{xSRS}} s_l$$

Alternatively, the eNodeB may select the refined beam as the Rx beam with the highest estimated spectrum efficiency.

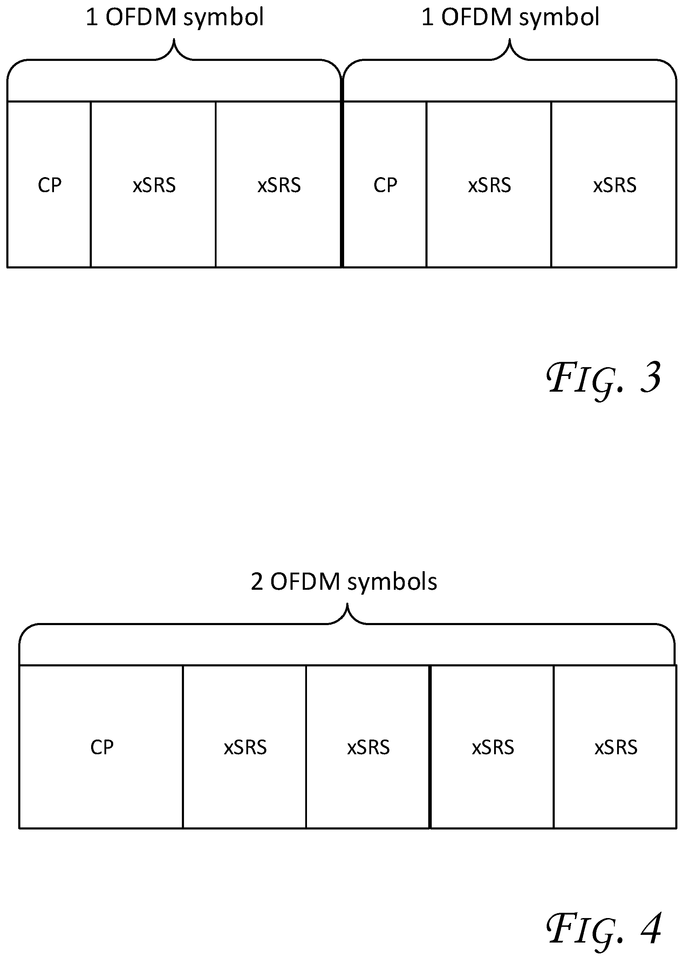

In another embodiment, the xSRS may be generated based on the Interleaved Frequency Division Multiplexing Access (IFDMA) signal. In accordance with an embodiment, Fig. 3 illustrates one example for xSRS time domain signal with two replica based IFDMA, where the eNodeB could use different Rx beam for each xSRS replica to refine the Rx beam. Relatively, the subcarrier spacing for xSRS can be 2$\Delta f$, where $\Delta f$ indicates the subcarrier spacing for other signals, e.g., $\Delta f$ = *75kHz*.

Alternatively, a longer Cyclic Prefix (CP) may be applied for the consecutive xSRS symbols. In an embodiment, Fig. 4 illustrates one example for the time domain signal of the two xSRS symbols, where the size of CP can be two times of normal CP. Then, the eNodeB may perform the Rx beam refinement in the consecutive four xSRS signal replica.

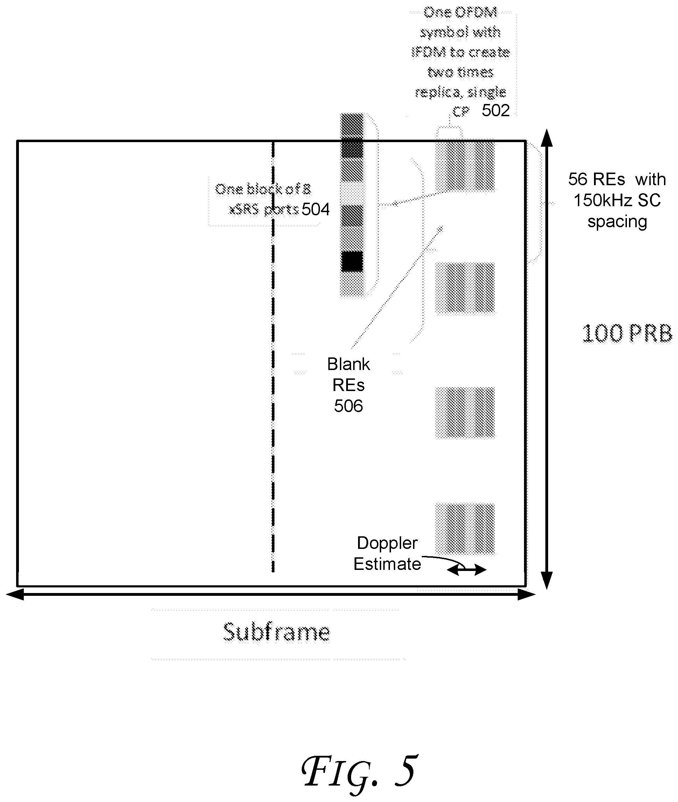

Fig. 5 illustrates one example for the xSRS signal structure, according to an embodiment. The term "SC" refers to subcarrier spacing which indicates the bandwidth of one subcarrier. The signal for each AP is transmitted in an FDM manner 502. The blanked REs 506 are reserved for other cells. Thus, the eNodeB could perform the Rx beam refinement within each symbol and estimate the Doppler frequency offset by the two symbols or perform the Rx beam refinement four times.

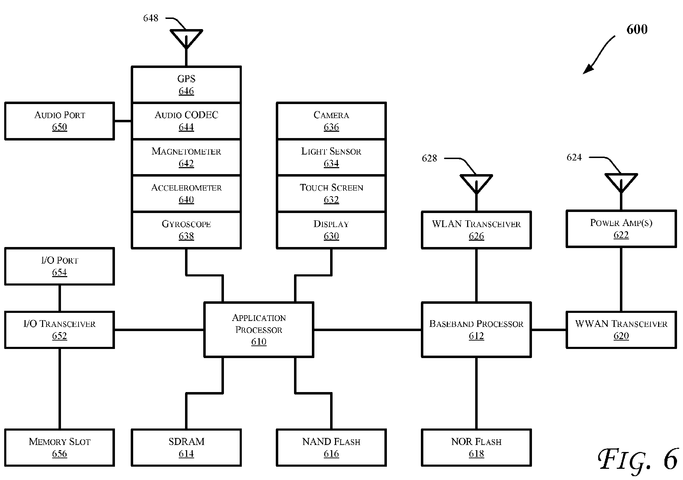

Referring now to Fig. 6, a block diagram of an information handling system capable of user equipment controlled mobility in an evolved radio access network in accordance with one or more embodiments will be discussed. Information handling system 600 of Fig. 6 may tangibly embody any one or more of the network elements described herein, above, including for example the elements of network 100 with greater or fewer components depending on the hardware specifications of the particular device. In one embodiment, information handling system 600 may tangibly embody a user equipment (UE) comprising circuitry to enter into an evolved universal mobile telecommunications system (UMTS) terrestrial radio access (E-UTRAN) Routing Area Paging Channel (ERA_PCH) state, wherein the UE is configured with an E-UTRAN Routing Area (ERA) comprising a collection of cell identifiers, and an Anchor identifier (Anchor ID) to identify an anchor evolved Node B (eNB) for the UE, select to a new cell without performing a handover procedure, and perform a cell update procedure in response to the UE selecting to the new cell, although the scope of the claimed subject matter is not limited in this respect. In another embodiment, information handling system 600 may tangibly embody a user equipment (UE) comprising circuitry to enter into a Cell Update Connected (CU_CNCTD) state, wherein the UE is configured with an Anchor identifier (Anchor ID) to identify an anchor evolved Node B (eNB) for the UE, select to a new cell, perform a cell update procedure in response to the UE selecting to the new cell, perform a buffer request procedure in response to the UE selecting to the new cell, and perform a cell update procedure to download buffered data and to perform data transmission with the new cell, although the scope of the claimed subject matter is not limited in this respect. Although information handling system 600 represents one example of several types of computing platforms, information handling system 600 may include more or fewer elements and/or different arrangements of elements than shown in Fig. 6, and the scope of the claimed subject matter is not limited in these respects.

In one or more embodiments, information handling system 600 may include an application processor 610 and a baseband processor 612. Application processor 610 may be utilized as a general-purpose processor to run applications and the various subsystems for information handling system 600. Application processor 610 may include a single core or alternatively may include multiple processing cores. One or more of the cores may comprise a digital signal processor or digital signal processing (DSP) core. Furthermore, application processor 610 may include a graphics processor or coprocessor disposed on the same chip, or alternatively a graphics processor coupled to application processor 610 may comprise a separate, discrete graphics chip. Application processor 610 may include on board memory such as cache memory, and further may be coupled to external memory devices such as synchronous dynamic random access memory (SDRAM) 614 for storing and/or executing applications during operation, and NAND flash 616 for storing applications and/or data even when information handling system 600 is powered off. In one or more embodiments, instructions to operate or configure the information handling system 600 and/or any of its components or subsystems to operate in a manner as described herein may be stored on an article of manufacture comprising a (e.g., non-transitory) storage medium. In one or more embodiments, the storage medium may comprise any of the memory devices shown in and described herein, although the scope of the claimed subject matter is not limited in this respect. Baseband processor 612 may control the broadband radio functions for information handling system 600. Baseband processor 612 may store code for controlling such broadband radio functions in a NOR flash 618. Baseband processor 612 controls a wireless wide area network (WWAN) transceiver 620 which is used for modulating and/or demodulating broadband network signals, for example for communicating via a 3GPP LTE or LTE-Advanced network or the like.

In general, WWAN transceiver 620 may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 6 (3rd Generation Partnership Project Release 12), 3GPP Rel. 7 (3rd Generation Partnership Project Release 12), 3GPP LTE Extra, LTE Licensed-Assisted Access (LAA), UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth®, Wireless Gigabit Alliance (WiGig) standard, millimeter wave (mmWave) standards in general for wireless systems operating at 10-90 GHz and above such as WiGig, IEEE 802.11ad, IEEE 802.11ay, and so on, and/or general telemetry transceivers, and in general any type of RF circuit or RFI sensitive circuit. It should be noted that such standards may evolve over time, and/or new standards may be promulgated, and the scope of the claimed subject matter is not limited in this respect.

The WWAN transceiver 620 couples to one or more power amps 642 respectively coupled to one or more antennas 624 for sending and receiving radio-frequency signals via the WWAN broadband network. The baseband processor 612 also may control a wireless local area network (WLAN) transceiver 626 coupled to one or more suitable antennas 628 and which may be capable of communicating via a Wi-Fi, Bluetooth®, and/or an amplitude modulation (AM) or frequency modulation (FM) radio standard including an IEEE 802.11 a/b/g/n standard or the like. It should be noted that these are merely example implementations for application processor 610 and baseband processor 612, and the scope of the claimed subject matter is not limited in these respects. For example, any one or more of SDRAM 614, NAND flash 616 and/or NOR flash 618 may comprise other types of memory technology such as magnetic memory, chalcogenide memory, phase change memory, or ovonic memory, and the scope of the claimed subject matter is not limited in this respect.

In one or more embodiments, application processor 610 may drive a display 630 for displaying various information or data, and may further receive touch input from a user via a touch screen 632 for example via a finger or a stylus. An ambient light sensor 634 may be utilized to detect an amount of ambient light in which information handling system 600 is operating, for example to control a brightness or contrast value for display 630 as a function of the intensity of ambient light detected by ambient light sensor 634. One or more cameras 636 may be utilized to capture images that are processed by application processor 610 and/or at least temporarily stored in NAND flash 616. Furthermore, application processor may couple to a gyroscope 638, accelerometer 640, magnetometer 642, audio coder/decoder (CODEC) 644, and/or global positioning system (GPS) controller 646 coupled to an appropriate GPS antenna 648, for detection of various environmental properties including location, movement, and/or orientation of information handling system 600. Alternatively, controller 646 may comprise a Global Navigation Satellite System (GNSS) controller. Audio CODEC 644 may be coupled to one or more audio ports 650 to provide microphone input and speaker outputs either via internal devices and/or via external devices coupled to information handling system via the audio ports 650, for example via a headphone and microphone jack. In addition, application processor 610 may couple to one or more input/output (I/O) transceivers 652 to couple to one or more I/O ports 654 such as a universal serial bus (USB) port, a high-definition multimedia interface (HDMI) port, a serial port, and so on. Furthermore, one or more of the I/O transceivers 652 may couple to one or more memory slots 656 for optional removable memory such as secure digital (SD) card or a subscriber identity module (SIM) card, although the scope of the claimed subject matter is not limited in these respects.

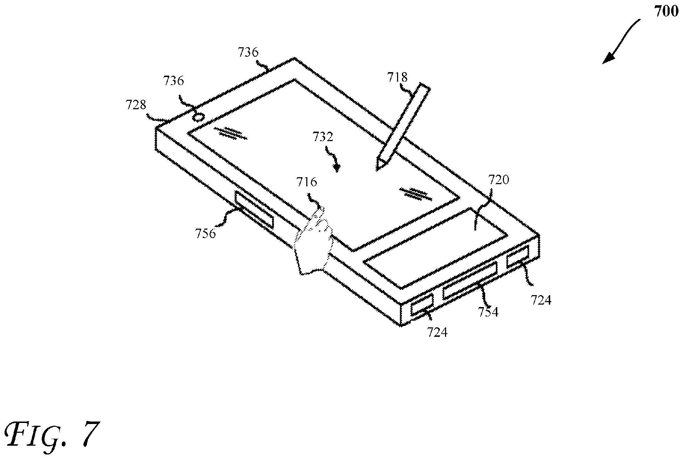

Referring now to Fig. 7, an isometric view of an information handling system of Fig. 6 that optionally may include a touch screen in accordance with one or more embodiments will be discussed. Fig. 7 shows an example implementation of information handling system 600 of Fig. 6 tangibly embodied as a cellular telephone, smartphone, or tablet type device or the like. The information handling system 600 may comprise a housing 710 having a display 630 which may include a touch screen 632 for receiving tactile input control and commands via a finger 716 of a user and/or a via stylus 718 to control one or more application processors 610. The housing 710 may house one or more components of information handling system 600, for example one or more application processors 610, one or more of SDRAM 614, NAND flash 616, NOR flash 618, baseband processor 612, and/or WWAN transceiver 620. The information handling system 600 further may optionally include a physical actuator area 720 which may comprise a keyboard or buttons for controlling information handling system via one or more buttons or switches. The information handling system 600 may also include a memory port or slot 656 for receiving nonvolatile memory such as flash memory, for example in the form of a secure digital (SD) card or a subscriber identity module (SIM) card. Optionally, the information handling system 600 may further include one or more speakers and/or microphones 724 and a connection port 654 for connecting the information handling system 600 to another electronic device, dock, display, battery charger, and so on. In addition, information handling system 600 may include a headphone or speaker jack 728 and one or more cameras 636 on one or more sides of the housing 710. It should be noted that the information handling system 600 of Fig. 7 may include more or fewer elements than shown, in various arrangements, and the scope of the claimed subject matter is not limited in this respect.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware. Embodiments described herein may be implemented into a system using any suitably configured hardware and/or software.

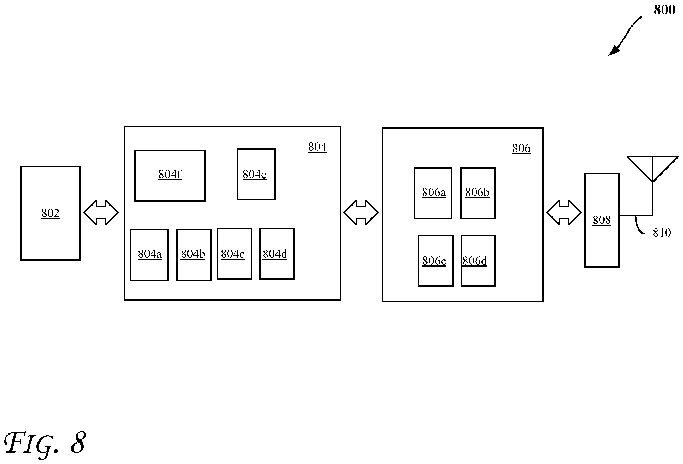

Referring now to Fig. 8, example components of a wireless device such as User Equipment (UE) device 110 in accordance with one or more embodiments will be discussed. In accordance with one embodiment, an eNB can include one or more components illustrated in and/or discussed with reference to Fig. 8. User equipment (UE) may correspond, for example, to UE 110 of network 100, although the scope of the claimed subject matter is not limited in this respect. In some embodiments, UE device 800 may include application circuitry 802, baseband circuitry 804, Radio Frequency (RF) circuitry 806, front-end module (FEM) circuitry 808 and one or more antennas 810, coupled together at least as shown.

Application circuitry 802 may include one or more application processors. For example, application circuitry 802 may include circuitry such as, but not limited to, one or more single-core or multi-core processors. The one or more processors may include any combination of general-purpose processors and dedicated processors, for example graphics processors, application processors, and so on. The processors may be coupled with and/or may include memory and/or storage and may be configured to execute instructions stored in the memory and/or storage to enable various applications and/or operating systems to run on the system.

Baseband circuitry 804 may include circuitry such as, but not limited to, one or more single-core or multi-core processors. Baseband circuitry 804 may include one or more baseband processors and/or control logic to process baseband signals received from a receive signal path of RF circuitry 806 and to generate baseband signals for a transmit signal path of the RF circuitry 806. Baseband processing circuity 804 may interface with the application circuitry 802 for generation and processing of the baseband signals and for controlling operations of the RF circuitry 806. For example, in some embodiments, the baseband circuitry 604 may include a second generation (2G) baseband processor 804a, third generation (3G) baseband processor 804b, fourth generation (4G) baseband processor 804c, and/or one or more other baseband processors 804d for other existing generations, generations in development or to be developed in the future, for example fifth generation (5G), sixth generation (6G), and so on. Baseband circuitry 804, for example one or more of baseband processors 804a through 804d, may handle various radio control functions that enable communication with one or more radio networks via RF circuitry 806. The radio control functions may include, but are not limited to, signal modulation and/or demodulation, encoding and/or decoding, radio frequency shifting, and so on. In some embodiments, modulation and/or demodulation circuitry of baseband circuitry 804 may include Fast-Fourier Transform (FFT), precoding, and/or constellation mapping and/or demapping functionality. In some embodiments, encoding and/or decoding circuitry of baseband circuitry 604 may include convolution, tail-biting convolution, turbo, Viterbi, and/or Low Density Parity Check (LDPC) encoder and/or decoder functionality. Embodiments of modulation and/or demodulation and encoder and/or decoder functionality are not limited to these examples and may include other suitable functionality in other embodiments.

In some embodiments, baseband circuitry 804 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. Processor 804e of the baseband circuitry 804 may be configured to run elements of the protocol stack for signaling of the PHY, MAC, RLC, PDCP and/or RRC layers. In some embodiments, the baseband circuitry may include one or more audio digital signal processors (DSP) 804f. The one or more audio DSPs 804f may include elements for compression and/or decompression and/or echo cancellation and may include other suitable processing elements in other embodiments. Components of the baseband circuitry may be suitably combined in a single chip, a single chipset, or disposed on a same circuit board in some embodiments. In some embodiments, some or all of the constituent components of baseband circuitry 804 and application circuitry 802 may be implemented together such as, for example, on a system on a chip (SOC).

In some embodiments, baseband circuitry 804 may provide for communication compatible with one or more radio technologies. For example, in some embodiments, baseband circuitry 804 may support communication with an evolved universal terrestrial radio access network (EUTRAN) and/or other wireless metropolitan area networks (WMAN), a wireless local area network (WLAN), a wireless personal area network (WPAN). Embodiments in which baseband circuitry 604 is configured to support radio communications of more than one wireless protocol may be referred to as multi-mode baseband circuitry.

RF circuitry 806 may enable communication with wireless networks using modulated electromagnetic radiation through a non-solid medium. In various embodiments, RF circuitry 806 may include switches, filters, amplifiers, and so on, to facilitate the communication with the wireless network. RF circuitry 806 may include a receive signal path which may include circuitry to down-convert RF signals received from FEM circuitry 808 and provide baseband signals to baseband circuitry 804. RF circuitry 806 may also include a transmit signal path which may include circuitry to up-convert baseband signals provided by the baseband circuitry 804 and provide RF output signals to FEM circuitry 808 for transmission.

In some embodiments, RF circuitry 806 may include a receive signal path and a transmit signal path. The receive signal path of RF circuitry 806 may include mixer circuitry 806a, amplifier circuitry 806b and filter circuitry 806c. The transmit signal path of RF circuitry 806 may include filter circuitry 806c and mixer circuitry 806a. RF circuitry 806 may also include synthesizer circuitry 806d for synthesizing a frequency for use by the mixer circuitry 806a of the receive signal path and the transmit signal path. In some embodiments, the mixer circuitry 806a of the receive signal path may be configured to down-convert RF signals received from FEM circuitry 808 based on the synthesized frequency provided by synthesizer circuitry 806d. Amplifier circuitry 806b may be configured to amplify the down-converted signals and the filter circuitry 806c may be a low-pass filter (LPF) or band-pass filter (BPF) configured to remove unwanted signals from the down-converted signals to generate output baseband signals. Output baseband signals may be provided to baseband circuitry 804 for further processing. In some embodiments, the output baseband signals may be zero-frequency baseband signals, although this is not a requirement. In some embodiments, mixer circuitry 806a of the receive signal path may comprise passive mixers, although the scope of the embodiments is not limited in this respect.

In some embodiments, mixer circuitry 806a of the transmit signal path may be configured to up-convert input baseband signals based on the synthesized frequency provided by synthesizer circuitry 806d to generate RF output signals for FEM circuitry 808. The baseband signals may be provided by the baseband circuitry 804 and may be filtered by filter circuitry 806c. Filter circuitry 806c may include a low-pass filter (LPF), although the scope of the embodiments is not limited in this respect.

In some embodiments, mixer circuitry 806a of the receive signal path and the mixer circuitry 806a of the transmit signal path may include two or more mixers and may be arranged for quadrature down conversion and/or up conversion respectively. In some embodiments, mixer circuitry 806a of the receive signal path and the mixer circuitry 806a of the transmit signal path may include two or more mixers and may be arranged for image rejection, for example Hartley image rejection. In some embodiments, mixer circuitry 606a of the receive signal path and the mixer circuitry 806a may be arranged for direct down conversion and/or direct up conversion, respectively. In some embodiments, mixer circuitry 806a of the receive signal path and mixer circuitry 806a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, RF circuitry 806 may include analog-to-digital converter (ADC) and digital-to-analog converter (DAC) circuitry, and baseband circuitry 604 may include a digital baseband interface to communicate with RF circuitry 806. In some dual-mode embodiments, separate radio integrated circuit (IC) circuitry may be provided for processing signals for one or more spectra, although the scope of the embodiments is not limited in this respect.

In some embodiments, synthesizer circuitry 806d may be a fractional-N synthesizer or a fractional N/N+1 synthesizer, although the scope of the embodiments is not limited in this respect as other types of frequency synthesizers may be suitable. For example, synthesizer circuitry 806d may be a delta-sigma synthesizer, a frequency multiplier, or a synthesizer comprising a phase-locked loop with a frequency divider.

Synthesizer circuitry 806d may be configured to synthesize an output frequency for use by mixer circuitry 806a of RF circuitry 806 based on a frequency input and a divider control input. In some embodiments, synthesizer circuitry 806d may be a fractional N/N+1 synthesizer.

In some embodiments, frequency input may be provided by a voltage controlled oscillator (VCO), although that is not a requirement. Divider control input may be provided by either baseband circuitry 804 or applications processor 802 depending on the desired output frequency. In some embodiments, a divider control input (e.g., N) may be determined from a look-up table based on a channel indicated by applications processor 802.

Synthesizer circuitry 806d of RF circuitry 806 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1, for example based on a carry out, to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 806d may be configured to generate a carrier frequency as the output frequency, while in other embodiments, the output frequency may be a multiple of the carrier frequency, for example twice the carrier frequency, four times the carrier frequency, and so on, and used in conjunction with quadrature generator and divider circuitry to generate multiple signals at the carrier frequency with multiple different phases with respect to each other. In some embodiments, the output frequency may be a local oscillator (LO) frequency (fLO). In some embodiments, RF circuitry 806 may include an in-phase and quadrature (IQ) and/or polar converter.

FEM circuitry 808 may include a receive signal path which may include circuitry configured to operate on RF signals received from one or more antennas 810, amplify the received signals and provide the amplified versions of the received signals to the RF circuitry 806 for further processing. FEM circuitry 808 may also include a transmit signal path which may include circuitry configured to amplify signals for transmission provided by RF circuitry 806 for transmission by one or more of the one or more antennas 810.

In some embodiments, FEM circuitry 808 may include a transmit/receive (TX/RX) switch to switch between transmit mode and receive mode operation. FEM circuitry 808 may include a receive signal path and a transmit signal path. The receive signal path of FEM circuitry 808 may include a low-noise amplifier (LNA) to amplify received RF signals and to provide the amplified received RF signals as an output, for example to RF circuitry 806. The transmit signal path of FEM circuitry 808 may include a power amplifier (PA) to amplify input RF signals, for example provided by RF circuitry 806, and one or more filters to generate RF signals for subsequent transmission, for example by one or more of antennas 810. In some embodiments, UE device 800 may include additional elements such as, for example, memory and/or storage, display, camera, sensor, and/or input/output (I/O) interface, although the scope of the claimed subject matter is not limited in this respect.

The following examples pertain to further embodiments. Example 1 includes an apparatus of a User Equipment (UE) capable to allow for uplink beam refinement, the apparatus of the UE comprising baseband circuitry, including one or more processors, to: generate a Fifth Generation (5G) Sounding Reference Signal (xSRS) to cause refinement to an uplink Receiving (Rx) beam; and multiplex a plurality of Orthogonal Frequency Division Multiplexing (OFDM) symbols in a subframe, wherein the xSRS is to be mapped to the plurality of OFDM symbols. Example 2 includes the apparatus of example 1 or any other example discussed herein, wherein the one or more processors of the baseband circuitry is to generate the xSRS to cause tracking of the uplink Rx beam. Example 3 includes the apparatus of any of examples 1-2 or any other example discussed herein, wherein each antenna port of the xSRS is to be mapped in accordance with Frequency Division Multiplex (FDM). Example 4 includes the apparatus of any of examples 1-3 or any other example discussed herein, wherein the xSRS is to be mapped to configure symbols with a fixed subcarrier interval. Example 5 includes the apparatus of any of examples 1-4 or any other example discussed herein, wherein the fixed subcarrier interval is to be pre-defined or configured by a higher layer signaling. Example 6 includes the apparatus of any of examples 1-5 or any other example discussed herein, wherein one or more subcarriers used for an xSRS sequence are to be determined based at least in part on one or more of: a cell ID (Identifier), a virtual cell ID, an xSRS ID, or configured by higher layer signaling. Example 7 includes the apparatus of any of examples 1-6 or any other example discussed herein, wherein the one or more processors of the baseband circuitry is to generate the xSRS in accordance with Interleaved FDM (IFDM). Example 8 includes the apparatus of any of examples 1-7 or any other example discussed herein, wherein an IFDM based xSRS is to be generated in consecutive xSRS symbols with an extended Cyclic Prefix (CP). Example 9 includes the apparatus of any of examples 1-8 or any other example discussed herein, wherein the Rx beam in all xSRS symbols is to be the same for the UE. Example 10 includes the apparatus of any of examples 1-9 or any other example discussed herein, wherein the xSRS is to comprise a plurality of Antenna Ports (APs) to support MIMO (Multiple Input, Multiple Output) operations. Example 11 includes the apparatus of any of examples 1-10 or any other example discussed herein, wherein the xSRS is to be configured per UE by an enhanced NodeB (eNB). Example 12 includes the apparatus of any of examples 1-11 or any other example discussed herein, wherein a base sequence of the xSRS is to be generated based on a Quadrature Phase Shift Keying (QPSK) or a Zadoff-Chu sequence.

Example 13 includes one or more computer-readable media having instructions stored thereon that, if executed by an apparatus of a user equipment (UE), result in: generating a Fifth Generation (5G) Sounding Reference Signal (xSRS); to cause refinement to an uplink Receiving (Rx) beam; and multiplexing a plurality of Orthogonal Frequency Division Multiplexing (OFDM) symbols in a subframe, wherein the xSRS is to be mapped to the plurality of OFDM symbols. Example 14 includes the one or more computer-readable media of example 13 or any other example discussed herein, wherein the instructions, if executed, result in mapping of the xSRS to configure symbols with a fixed subcarrier interval. Example 15 includes the one or more computer-readable media of any of examples 13-14 or any other example discussed herein, wherein the instructions, if executed, result in generation of an IFDM based xSRS in consecutive xSRS symbols with an extended Cyclic Prefix (CP).

Example 16 includes an apparatus of an enhanced NodeB (eNB) capable to allow for uplink beam refinement, the apparatus of the eNB comprising baseband circuitry, including one or more processors, to: detect a Fifth Generation (5G) Sounding Reference Signal (xSRS); refine an uplink Receiving (Rx) beam based at least in part on the detected xSRS; and de-multiplex a plurality of Orthogonal Frequency Division Multiplexing (OFDM) symbols in a subframe, wherein the xSRS is to be mapped to the plurality of OFDM symbols. Example 17 includes the apparatus of example 16 or any other example discussed herein, wherein the one or more processors of the baseband circuitry is to process the xSRS to track the uplink Rx beam. Example 18 includes the apparatus of any of examples 16-17 or any other example discussed herein, wherein the one or more processors of the baseband circuitry is to map each antenna port of the xSRS in accordance with Frequency Division Multiplex (FDM). Example 19 includes the apparatus of any of examples 16-18 or any other example discussed herein, wherein the one or more processors of the baseband circuitry is to map the xSRS to configure symbols with a fixed subcarrier interval. Example 20 includes the apparatus of any of examples 16-19 or any other example discussed herein, wherein the fixed subcarrier interval is to be pre-defined or configured by a higher layer signaling. Example 21 includes the apparatus of any of examples 16-20 or any other example discussed herein, wherein the one or more processors of the baseband circuitry is to determine one or more subcarriers used for an xSRS sequence based at least in part on one or more of: a cell ID (Identifier), a virtual cell ID, an xSRS ID, or configured by higher layer signaling.

Example 22 includes the apparatus of any of examples 16-21 or any other example discussed herein, wherein the one or more processors of the baseband circuitry is to process the xSRS in accordance with Interleaved FDM (IFDM). Example 23 includes the apparatus of any of examples 16-22 or any other example discussed herein, wherein the one or more processors of the baseband processing circuitry is to process an IFDM based xSRS in consecutive xSRS symbols with an extended Cyclic Prefix (CP). Example 24 includes the apparatus of any of examples 16-23 or any other example discussed herein, wherein the Rx beam in all xSRS symbols is to be the same for a UE. Example 25 includes the apparatus of any of examples 16-24 or any other example discussed herein, wherein the xSRS is to comprise a plurality of Antenna Ports (APs) to support MIMO (Multiple Input, Multiple Output) operations. Example 26 includes the apparatus of any of examples 16-25 or any other example discussed herein, wherein the one or more processors of the baseband circuitry is to configure the xSRS per UE. Example 27 includes the apparatus of any of examples 16-26 or any other example discussed herein, wherein the one or more processors of the baseband circuitry is to process a base sequence of the xSRS based on a Quadrature Phase Shift Keying (QPSK) or a Zadoff-Chu sequence.

Example 28 includes one or more computer-readable media having instructions stored thereon that, if executed by an apparatus of an eNB), result in: detecting a Fifth Generation (5G) Sounding Reference Signal (xSRS); refining an uplink Receiving (Rx) beam based at least in part on the detected xSRS; and de-multiplexing a plurality of Orthogonal Frequency Division Multiplexing (OFDM) symbols in a subframe, wherein the xSRS is to be mapped to the plurality of OFDM symbols. Example 29 includes the one or more computer-readable media of example 28 or any other example discussed herein, wherein the instructions, if executed, result in mapping of the xSRS to configure symbols with a fixed subcarrier interval. Example 30 includes the one or more computer-readable media of any of examples 28-29 or any other example discussed herein, wherein the instructions, if executed, result in processing of an IFDM based xSRS in consecutive xSRS symbols with an extended Cyclic Prefix (CP).

Example 31 includes a system comprising: memory to store information corresponding to a cellular communication; and an apparatus of a User Equipment (UE) capable to allow for uplink beam refinement, the apparatus of the UE comprising baseband circuitry, including one or more processors, to: generate a Fifth Generation (5G) Sounding Reference Signal (xSRS) to cause refinement to an uplink Receiving (Rx) beam; and multiplex a plurality of Orthogonal Frequency Division Multiplexing (OFDM) symbols in a subframe, wherein the xSRS is to be mapped to the plurality of OFDM symbols. Example 32 includes the system of example 31 or any other example discussed herein, wherein the one or more processors of the baseband circuitry is to generate the xSRS to cause tracking of the uplink Rx beam. Example 33 includes the system of any of examples 31-32 or any other example discussed herein, wherein each antenna port of the xSRS is to be mapped in accordance with Frequency Division Multiplex (FDM).

Example 34 includes a system comprising: memory to store information corresponding to a cellular communication; and an apparatus of an enhanced NodeB (eNB) capable to allow for uplink beam refinement, the apparatus of the eNB comprising baseband circuitry, including one or more processors, to: detect a Fifth Generation (5G) Sounding Reference Signal (xSRS); refine an uplink Receiving (Rx) beam based at least in part on the detected xSRS; and de-multiplex a plurality of Orthogonal Frequency Division Multiplexing (OFDM) symbols in a subframe, wherein the xSRS is to be mapped to the plurality of OFDM symbols. Example 35 includes the system of example 34 or any other example discussed herein, wherein the one or more processors of the baseband circuitry is to process the xSRS to track the uplink Rx beam. Example 36 includes the system of any of examples 34-35 or any other example discussed herein, wherein the one or more processors of the baseband circuitry is to map each antenna port of the xSRS in accordance with Frequency Division Multiplex (FDM).

Example 37 includes an apparatus comprising means to perform a method as set forth in any preceding example. Example 38 comprises machine-readable storage including machine-readable instructions, when executed, to implement a method or realize an apparatus as set forth in any preceding example.

In various embodiments, the operations discussed herein, e.g., with reference to Figs. 1-8, may be implemented as hardware (e.g., logic circuitry), software, firmware, or combinations thereof, which may be provided as a computer program product, e.g., including a tangible (e.g., non-transitory) machine-readable or computer-readable medium having stored thereon instructions (or software procedures) used to program a computer to perform a process discussed herein. The machine-readable medium may include a storage device such as those discussed with respect to Figs. 1-8.

Additionally, such computer-readable media may be downloaded as a computer program product, wherein the program may be transferred from a remote computer (e.g., a server) to a requesting computer (e.g., a client) by way of data signals provided in a carrier wave or other propagation medium via a communication link (e.g., a bus, a modem, or a network connection).

Reference in the specification to "one embodiment" or "an embodiment" means that a particular feature, structure, and/or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Further, in the description and/or claims, the terms "coupled" and/or connected, along with their derivatives, may be used. In particular embodiments, connected may be used to indicate that two or more elements are in direct physical and/or electrical contact with each other. Coupled may mean that two or more elements are in direct physical and/or electrical contact. However, coupled may also mean that two or more elements may not be in direct contact with each other, but yet may still cooperate and/or interact with each other. For example, "coupled" may mean that two or more elements do not contact each other but are indirectly joined together via another element or intermediate elements.

Additionally, the terms "on," "overlying," and "over" may be used in the description and claims. "On," "overlying," and "over" may be used to indicate that two or more elements are in direct physical contact with each other. However, "over" may also mean that two or more elements are not in direct contact with each other. For example, "over" may mean that one element is above another element but not contact each other and may have another element or elements in between the two elements. Furthermore, the term "and/or" may mean "and", it may mean "or", it may mean "exclusive-or", it may mean "one", it may mean "some, but not all", it may mean "neither", and/or it may mean "both", although the scope of claimed subject matter is not limited in this respect. In the following description and/or claims, the terms "comprise" and "include," along with their derivatives, may be used and are intended as synonyms for each other.

Thus, although embodiments have been described in language specific to structural features and/or methodological acts, it is to be understood that claimed subject matter may not be limited to the specific features or acts described. Rather, the specific features and acts are disclosed as sample forms of implementing the claimed subject matter.

**Claims**

1. An apparatus of a base station, BS, (110) capable to allow for uplink beam refinement, the apparatus of the BS comprising baseband circuitry, including one or more processors configured to:

   detect a Fifth Generation, 5G, Sounding Reference Signal, xSRS transmitted in a subframe in a channel transmitted from a User Equipment UE, to the BS, wherein a base sequence of the xSRS is generated based on a Quadrature Phase Shift Keying, QPSK, or a Zadoff-Chu sequence;
   refine an uplink Receiving, Rx, beam based at least in part on the detected xSRS; and
   de-multiplex a plurality of Orthogonal Frequency Division Multiplexing, OFDM, symbols in a subframe, wherein the xSRS is mapped to the plurality of OFDM symbols,
   wherein the refinement is based on a Channel Quality Indicator, CQI, measured based on the BS trying two Rx beams for two xSRS symbols and obtaining a horizontal and vertical angle of a refined beam based on spectrum efficiencies of the two Rx beams by:

$$\theta = \sqrt{\frac{s_1}{s_1 + s_2}}\,\theta_1 + \sqrt{\frac{s_2}{s_1 + s_2}}\,\theta_2$$

$$\varphi = \sqrt{\frac{s_1}{s_1 + s_2}}\,\varphi_1 + \sqrt{\frac{s_2}{s_1 + s_2}}\,\varphi_2$$

   where $\theta_j$ indicates horizontal angle of the Rx beam for xSRS symbol $j$; $\varphi_j$ indicates vertical angle of the Rx beam for xSRS symbol $j$; $s_j$ denotes the spectrum efficiency measured from xSRS symbol $j$, and
   wherein the one or more processors are further configured to: determine one or more subcarriers used for the base sequence of the xSRS based at least in part on one or more of: a cell ID, Identifier, a virtual cell ID, an xSRS ID, or configured by higher layer signaling.

2. The apparatus of claim 1, wherein the one or more processors of the baseband circuitry is to process the xSRS to track

EP 3 408 961 B1

the uplink Rx beam.

3. The apparatus of any of claims 1-2, wherein the one or more processors of the baseband circuitry is to map the xSRS to configure symbols with a fixed subcarrier interval, or wherein the fixed subcarrier interval is to be pre-defined or configured by a higher layer signaling.

4. The apparatus of any of claims 1-3, wherein the one or more processors of the baseband circuitry is configured to process the xSRS in accordance with Interleaved FDM, IFDM, or wherein the one or more processors of the baseband circuitry is to process an IFDM based xSRS in consecutive xSRS symbols with an extended Cyclic Prefix, CP.

5. The apparatus of any of claims 1-4, wherein the Rx beam in all xSRS symbols is to be the same for a UE.

6. The apparatus of any of claims 1-5, wherein the one or more processors of the baseband circuitry is to configure the xSRS per UE.

7. A method of uplink beam refinement performable by an apparatus of a base station, BS, (110), comprising:

detecting a Fifth Generation, 5G, Sounding Reference Signal, xSRS transmitted in a subframe in a channel transmitted from a User Equipment. UE, to the BS, wherein a base sequence of the xSRS is generated based on a Quadrature Phase Shift Keying, QPSK, or a Zadoff-Chu sequence, and wherein one or more subcarriers used for the base sequence of the xSRS is determined based at least in part on one or more of: a cell ID, Identifier, a virtual cell ID, an xSRS ID, or configured by higher layer signaling;
refining an uplink Receiving, Rx, beam based at least in part on the detected xSRS; and
de-multiplexing a plurality of Orthogonal Frequency Division Multiplexing, OFDM, symbols in a subframe, wherein the xSRS is mapped to the plurality of OFDM symbols,
wherein the refinement is based on a Channel Quality Indicator, CQI, measured based on the BS trying two Rx beams for two xSRS symbols and obtaining a horizontal and vertical angle of a refined beam based on spectrum efficiencies of the two Rx beams by:

$$\theta = \sqrt{\frac{s_1}{s_1 + s_2}}\,\theta_1 + \sqrt{\frac{s_2}{s_1 + s_2}}\,\theta_2$$

$$\varphi = \sqrt{\frac{s_1}{s_1 + s_2}}\,\varphi_1 + \sqrt{\frac{s_2}{s_1 + s_2}}\,\varphi_2$$

where $\theta_j$ indicates horizontal angle of the Rx beam for xSRS symbol $j$; $\varphi_j$ indicates vertical angle of the Rx beam for xSRS symbol $j$; $s_j$ denotes the spectrum efficiency measured from xSRS symbol $j$.

8. The method of claim 7, further comprising:
processing the xSRS to track the uplink Rx beam.

9. The method of any of claims 7-8, further comprising:
mapping the xSRS to configure symbols with a fixed subcarrier interval.

10. The method of any of claims 7-9, wherein the fixed subcarrier interval is to be pre-defined or configured by a higher layer signaling.

11. The method of any of claims 7-10, further comprising:
processing the xSRS in accordance with Interleaved FDM, IFDM.

12. The method of any of claims 7-11, further comprising:
processing an IFDM based xSRS in consecutive xSRS symbols with an extended Cyclic Prefix, CP.

13. The method of any of claims 7-12, wherein the Rx beam in all xSRS symbols is to be the same for a UE.

14

**14.** The method of any of claims 7-13, further comprising:
configuring the xSRS per UE.

**15.** The method of any of claims 7-14, wherein the xSRS is mapped to at least two OFDM symbols of the plurality of OFDM symbols in the subframe.

**Patentansprüche**

**1.** Vorrichtung einer Basisstation (BS) (110), die eine Verfeinerung des Uplink-Strahls ermöglicht, wobei die Vorrichtung der BS eine Basisbandschaltung umfasst, die einen oder mehrere Prozessoren beinhaltet, die konfiguriert sind zum:

Erfassen eines Referenzsignals der fünften Generation (5G), xSRS, das in einem Subframe in einem Kanal übertragen wird, der von einer Benutzervorrichtung (UE) an die BS übertragen wird, wobei eine Basissequenz des xSRS auf der Grundlage einer Quadratur-Phasenumtastung (QPSK) oder einer Zadoff-Chu-Sequenz erzeugt wird;
Verfeinern eines Uplink-Empfangsstrahls (Rx) zumindest teilweise auf der Grundlage des erfassten xSRS verfeinert wird; und
Demultiplexen einer Vielzahl von Orthogonal-Frequency-Division-Multiplexing-OFDM-Symbolen in einem Subframe,
wobei das xSRS auf die Vielzahl von OFDM-Symbolen abgebildet wird,
wobei die Verfeinerung auf einem Kanalqualitätsindikator (CQI) basiert, der gemessen wird, indem die BS zwei Rx-Beams für zwei xSRS-Symbole ausprobiert und einen horizontalen und vertikalen Winkel eines verfeinerten Beams basierend auf den Spektrumseffizienzen der beiden Rx-Beams erhält, indem:

$$\theta = \sqrt{\frac{s_1}{s_1 + s_2}}\,\theta_1 + \sqrt{\frac{s_2}{s_1 + s_2}}\,\theta_2$$

$$\varphi = \sqrt{\frac{s_1}{s_1 + s_2}}\,\varphi_1 + \sqrt{\frac{s_2}{s_1 + s_2}}\,\varphi_2$$

wobei $\theta_j$ den horizontalen Winkel des Rx-Strahls für das xSRS-Symbol j angibt; $\varphi_j$ den vertikalen Winkel des Rx-Strahls für das xSRS-Symbol j angibt; $s_j$ die Spektrumseffizienz angibt, die anhand des xSRS-Symbols j gemessen wurde, und
wobei der eine oder die mehreren Prozessoren ferner so konfiguriert sind, dass sie: einen oder mehrere Unterträger bestimmen, die für die Basissequenz des xSRS verwendet werden, zumindest teilweise basierend auf einem oder mehreren der folgenden Elemente: einer Zellen-ID, einer Kennung, einer virtuellen Zellen-ID, einer xSRS-ID oder konfiguriert durch Signalisierung einer höheren Schicht.

**2.** Vorrichtung nach Anspruch 1, wobei der eine oder die mehreren Prozessoren der Basisbandschaltung dazu dienen, das xSRS zu verarbeiten, um den Uplink-Empfangsstrahl zu verfolgen.

**3.** Vorrichtung nach einem der Ansprüche 1-2, wobei der eine oder die mehreren Prozessoren der Basisbandschaltung dazu dienen, die xSRS abzubilden, um Symbole mit einem festen Unterträgerintervall zu konfigurieren, oder wobei das feste Unterträgerintervall durch eine Signalisierung einer höheren Schicht vordefiniert oder konfiguriert werden soll.

**4.** Vorrichtung nach einem der Ansprüche 1 bis 3, wobei der eine oder die mehreren Prozessoren der Basisbandschaltung so konfiguriert sind, dass sie das xSRS gemäß Interleaved FDM, IFDM, verarbeiten, oder wobei der eine oder die mehreren Prozessoren der Basisbandschaltung ein IFDM-basiertes xSRS in aufeinanderfolgenden xSRS-Symbolen mit einem erweiterten zyklischen Präfix, CP, verarbeiten sollen.

**5.** Vorrichtung nach einem der Ansprüche 1 bis 4, wobei der Rx-Strahl in allen xSRS-Symbolen für eine UE gleich sein soll.

6. Vorrichtung nach einem der Ansprüche 1 bis 5, wobei der eine oder die mehreren Prozessoren der Basisbandschaltung das xSRS pro UE konfigurieren sollen.

7. Verfahren zur Verfeinerung des Uplink-Strahls, das von einer Vorrichtung einer Basisstation (BS) (110) durchgeführt werden kann, umfassend:

Erfassen eines Referenzsignals der fünften Generation (5G), Sounding Reference Signal (xSRS) zu erfassen, das in einem Subframe in einem Kanal übertragen wird, der von einer Benutzervorrichtung (UE) an die BS übertragen wird, wobei eine Basissequenz des xSRS auf der Grundlage einer Quadrature Phase Shift Keying (QPSK) oder einer Zadoff-Chu-Sequenz erzeugt wird und wobei ein oder mehrere Unterträger, die für die Basissequenz des xSRS verwendet werden, zumindest teilweise auf der Grundlage eines oder mehrerer der folgenden Elemente bestimmt werden: einer Zellen-ID, einer virtuellen Zellen-ID, einer xSRS-ID oder durch Signalisierung einer höheren Schicht konfiguriert wird;
Verfeinerung eines Uplink-Empfangsstrahls (Rx) zumindest teilweise auf der Grundlage der erfassten xSRS; und Demultiplexen einer Vielzahl von Orthogonal-Frequency-Division-Multiplexing-OFDM-Symbole in einem Subframe,
wobei das xSRS auf die Vielzahl von OFDM-Symbolen abgebildet wird,
wobei die Verfeinerung auf einem Kanalqualitätsindikator (CQI) basiert, der gemessen wird, basierend auf die BS, die zwei Rx-Beams für zwei xSRS-Symbole ausprobiert und einen horizontalen und einen vertikalen Winkel eines verfeinerten Beams basierend auf den Spektrumseffizienzen der beiden Rx-Beams erhält, indem:

$$\theta = \sqrt{\frac{s_1}{s_1 + s_2}}\,\theta_1 + \sqrt{\frac{s_2}{s_1 + s_2}}\,\theta_2$$

$$\varphi = \sqrt{\frac{s_1}{s_1 + s_2}}\,\varphi_1 + \sqrt{\frac{s_2}{s_1 + s_2}}\,\varphi_2$$

wobei $\theta_j$ den horizontalen Winkel des Rx-Strahls für das xSRS-Symbol j angibt; $\varphi_j$ den vertikalen Winkel des Rx-Strahls für das xSRS-Symbol $j$ angibt; $s_j$ die Spektrumseffizienz angibt, gemessen vom xSRS-Symbol $j$.

8. Verfahren nach Anspruch 7, ferner umfassend:
Verarbeiten des xSRS, um den Uplink-Rx-Strahl zu verfolgen.

9. Verfahren nach einem der Ansprüche 7 bis 8, ferner umfassend:
Abbilden des xSRS, um Symbole mit einem festen Unterträgerintervall zu konfigurieren.

10. Verfahren nach einem der Ansprüche 7 bis 9, wobei das feste Unterträgerintervall durch eine Signalisierung einer höheren Schicht vordefiniert oder konfiguriert werden soll.

11. Verfahren nach einem der Ansprüche 7 bis 10, ferner umfassend:
Verarbeiten des xSRS gemäß Interleaved FDM, IFDM.

12. Verfahren nach einem der Ansprüche 7 bis 11, ferner umfassend:
Verarbeiten eines IFDM-basierten xSRS in aufeinanderfolgenden xSRS-Symbolen mit einem erweiterten zyklischen Präfix (CP).

13. Verfahren nach einem der Ansprüche 7 bis 12, wobei der Rx-Strahl in allen xSRS-Symbolen für ein UE gleich sein soll.

14. Verfahren nach einem der Ansprüche 7 bis 13, das ferner umfasst:
Konfigurieren des xSRS pro UE.

15. Verfahren nach einem der Ansprüche 7 bis 14, wobei das xSRS mindestens zwei OFDM-Symbolen der Vielzahl von OFDM-Symbolen im Subframe zugeordnet wird.

**Revendications**

1. Un appareil d'une station de base, BS, (110) apte à permettre un affinement de faisceau de liaison montante, l'appareil de la BS comprenant une circuiterie de bande de base, comportant un ou plusieurs processeurs configurés pour :

   détecter un signal de référence de sondage de Cinquième génération, 5G, xSRS, transmis dans une sous-trame dans un canal transmis par un équipement utilisateur, UE, à la BS, dans lequel une séquence de base du xSRS est générée sur la base d'une modulation par déplacement de phase en quadrature, QPSK, ou d'une séquence de Zadoff-Chu ;
   affiner un faisceau de réception, Rx, de liaison montante sur la base au moins en partie du xSRS détecté ; et démultiplexer une pluralité de symboles de multiplexage par répartition en fréquences orthogonales, OFDM, dans une sous-trame,
   dans lequel le xSRS est mappé à la pluralité de symboles OFDM,
   dans lequel l'affinement est basé sur un indicateur de qualité de canal, CQI, mesuré sur la base de la BS essayant deux faisceaux Rx pour deux symboles xSRS et obtenant un angle horizontal et vertical d'un faisceau affiné sur la base d'efficacités spectrales des deux faisceaux Rx par :

   $$\theta = \sqrt{\frac{s_1}{s_1 + s_2}}\theta_1 + \sqrt{\frac{s_2}{s_1 + s_2}}\theta_2$$

   $$\varphi = \sqrt{\frac{s_1}{s_1 + s_2}}\varphi_1 + \sqrt{\frac{s_2}{s_1 + s_2}}\varphi_2$$

   où $\theta_j$ indique l'angle horizontal du faisceau Rx pour le symbole xSRS $j$ ; $\varphi_j$ indique l'angle vertical du faisceau Rx pour le symbole xSRS $j$ ; $s_j$ désigne l'efficacité spectrale mesurée à partir du symbole xSRS $j$, et
   dans lequel les un ou plusieurs processeurs sont en outre configurés pour : déterminer une ou plusieurs sous-porteuses utilisées pour la séquence de base du xSRS sur la base au moins en partie d'un ou plusieurs parmi : un identifiant, ID, de cellule, un ID de cellule virtuel, un ID de xSRS, ou configurées par une signalisation de couche supérieure.

2. L'appareil selon la revendication 1, dans lequel les un ou plusieurs processeurs de la circuiterie de bande de base doivent traiter le xSRS pour suivre le faisceau Rx de liaison montante.

3. L'appareil selon l'une des revendications 1 et 2, dans lequel les un ou plusieurs processeurs de la circuiterie de bande de base doivent mapper le xSRS pour configurer des symboles avec un intervalle de sous-porteuse fixe, ou dans lequel l'intervalle de sous-porteuse fixe doit être prédéfini ou configuré par une signalisation de couche supérieure.

4. L'appareil selon l'une des revendications 1 à 3, dans lequel les un ou plusieurs processeurs de la circuiterie de bande de base sont configurés pour traiter le xSRS conformément à Interleaved FDM, IFDM, ou dans lequel les un ou plusieurs processeurs de la circuiterie de bande de base doivent traiter un xSRS basé sur IFDM dans des symboles xSRS consécutifs avec un préfixe cyclique, CP, étendu.

5. L'appareil selon l'une des revendications 1 à 4, dans lequel le faisceau Rx de tous les symboles xSRS doit être le même pour un UE.

6. L'appareil selon l'une des revendications 1 à 5, dans lequel les un ou plusieurs processeurs de la circuiterie de bande de base doivent configurer le xSRS UE par UE.

7. Un procédé d'affinement de faisceau de liaison montante réalisable par un appareil d'une station de base, BS, (110), comprenant :

   la détection d'un signal de référence de sondage de Cinquième génération, 5G, xSRS, transmis dans une sous-trame dans un canal transmis par un équipement utilisateur, UE, à la BS, dans lequel une séquence de base du xSRS est générée sur la base d'une modulation par déplacement de phase en quadrature, QPSK, ou d'une séquence de Zadoff-Chu, et dans lequel une ou plusieurs sous-porteuses utilisées pour la séquence de base du

17

xSRS sont déterminées sur la base au moins en partie d'un ou

plusieurs parmi : un identifiant, ID, de cellule, un ID de cellule virtuel, un ID de xSRS, ou configurées par une signalisation de couche supérieure ;

l'affinement d'un faisceau de réception, Rx, de liaison montante sur la base au moins en partie du xSRS détecté ; et

le démultiplexage d'une pluralité de symboles de multiplexage par répartition en fréquences orthogonales, OFDM, dans une sous-trame,

dans lequel le xSRS est mappé à la pluralité de symboles OFDM,

dans lequel l'affinement est basé sur un indicateur de qualité de canal, CQI, mesuré sur la base de la BS essayant deux faisceaux Rx pour deux symboles xSRS et obtenant un angle horizontal et vertical d'un faisceau affiné sur la base d'efficacités spectrales des deux faisceaux Rx par :

$$\theta = \sqrt{\frac{s_1}{s_1 + s_2}}\theta_1 + \sqrt{\frac{s_2}{s_1 + s_2}}\theta_2$$

$$\varphi = \sqrt{\frac{s_1}{s_1 + s_2}}\varphi_1 + \sqrt{\frac{s_2}{s_1 + s_2}}\varphi_2$$

où $\theta_j$ indique l'angle horizontal du faisceau Rx pour le symbole xSRS $j$ ; $\varphi_j$ indique l'angle vertical du faisceau Rx pour le symbole xSRS j ; $s_j$ désigne l'efficacité spectrale mesurée à partir du symbole xSRS $j$.

**8.** Le procédé selon la revendication 7, comprenant en outre :
le traitement du xSRS pour suivre le faisceau Rx de liaison montante.

**9.** Le procédé selon l'une des revendications 7 à 8, comprenant en outre :
le mappage du xSRS pour configurer des symboles avec un intervalle de sous-porteuse fixe.

**10.** Le procédé selon l'une des revendications 7 à 9, dans lequel l'intervalle de sous-porteuse fixe doit être prédéfini ou configuré par une signalisation de couche supérieure.

**11.** Le procédé selon l'une des revendications 7 à 10, comprenant en outre :

le traitement des xSRS conformément à Interleaved FDM, IFDM.

**12.** Le procédé selon l'une des revendications 7 à 11, comprenant en outre :
le traitement d'un xSRS basé sur IFDM dans des symboles xSRS consécutifs avec un préfixe cyclique, CP, étendu.

**13.** Le procédé selon l'une des revendications 7 à 12, dans lequel le faisceau Rx dans tous les symboles xSRS doit être le même pour un UE.

**14.** Le procédé selon l'une des revendications 7 à 13, comprenant en outre :
la configuration du xSRS par UE.

**15.** Procédé selon l'une des revendications 7 à 14, dans lequel le xSRS est mappé sur au moins deux symboles OFDM de la pluralité de symboles OFDM dans la sous-trame.

FIG. 1

One block of 8
xSRS ports 204

Blank REs
206

202

56
REs

100 PRB

Doppler
Estimate

Subframe

*FIG. 2*

1 OFDM symbol     1 OFDM symbol

| CP | xSRS | xSRS | CP | xSRS | xSRS |

*FIG. 3*

2 OFDM symbols

| CP | xSRS | xSRS | xSRS | xSRS |

*FIG. 4*

One OFDM symbol with IFDM to create two times replica, single CP 502

One block of 8 xSRS ports 504

56 REs with 150kHz SC spacing

100 PRB

Blank REs 506

Doppler Estimate

Subframe

*FIG. 5*

648

600

GPS
646

AUDIO PORT
650

AUDIO CODEC
644

CAMERA
636

MAGNETOMETER
642

LIGHT SENSOR
634

628

624

ACCELEROMETER
640

TOUCH SCREEN
632

WLAN TRANSCEIVER
626

POWER AMP(S)
622

GYROSCOPE
638

DISPLAY
630

I/O PORT
654

APPLICATION
PROCESSOR
610

I/O TRANSCEIVER
652

BASEBAND PROCESSOR
612

WWAN TRANSCEIVER
620

MEMORY SLOT
656

SDRAM
614

NAND FLASH
616

NOR FLASH
618

*FIG. 6*

**FIG. 7**

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62288309

- WO 2015080645 A

**Non-patent literature cited in the description**

- **FUJITSU**. *Discussion on possible CSI-RS and SRS enhancement for EBF/FD-MIMO*, vol. RAN WG1